(19) **Europäisches Patentamt**

**European Patent Office**

**Office européen des brevets**

(11) **EP 1 524 866 A2**

(12) **EUROPÄISCHE PATENTANMELDUNG**

(43) Veröffentlichungstag:
**20.04.2005 Patentblatt 2005/16**

(51) Int Cl.⁷: **H04N 13/00**

(21) Anmeldenummer: **04024692.8**

(22) Anmeldetag: **15.10.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **15.10.2003 DE 10348684**

(71) Anmelder: **Link, Norbert, Prof. Dr.
76187 Karlsruhe (DE)**

(72) Erfinder: **Link, Norbert, Prof. Dr.
76187 Karlsruhe (DE)**

(74) Vertreter: **Eisenführ, Speiser & Partner
Patentanwälte Rechtsanwälte
Postfach 10 60 78
28060 Bremen (DE)**

(54) **Stereoskopisches Bildaufnahmegerät**

(57) Es wird eine Abstandsbild-Videoeinrichtung vorgesehen mit einer Videoeinheit zum Aufzeichnen von Videobildern, einer rektifizierenden katadioptrischen Stereo-Spiegelanordnung und einer Recheneinheit zum Auswerten der von der Videoeinheit aufgezeichneten Videobilder und zum Erzeugen eines zusätzlichen Bildes für jedes aufgezeichnete Videobild, wobei das zusätzliche Bild den jeweiligen Abstand der zu den Videobildpunkten gehörenden Objektpunkte von der Videoeinheit wiedergibt.

Durch Kombination einer rektifizierenden katadioptrischen Stereo-Anordnung mit einem lokalen Approximationsverfahren für die Disparitätsberechnung kompensieren sich die Nachteile der beiden Komponenten, d. h. kleine erzielbare bzw. behandelbare Disparitäten, und die Vorteile, d. h. Verzichtbarkeit der numerischen Bildrektifizierung bzw. geringe numerische Komplexität, kommen zum Tragen. Somit kann die benötigte Zeit zur Erstellung eines Abstandbildes um mehr als eine Größenordnung gesenkt werden.

Fig. 2

EP 1 524 866 A2

**Beschreibung**

Technisches Gebiet

Die Abstandsbild-Videoeinrichtung gehört zum technischen Gebiet der berührungslosen, bildgebenden Abstandsmessung, wobei ein Bilddatenstrom erzeugt wird, dessen Bildpunkte als Werte den Abstand des jeweils zugehörigen abgebildeten Objektpunktes wiedergeben.

Stand der Technik

Auf dem Gebiet der berührungslosen, bildgebenden Abstandsmessung sind eine Reihe von Techniken und Verfahren bekannt. Eine Gruppe davon basiert auf aktiver, gepulster Beleuchtung und bildpunktweiser Laufzeitbestimmung, aus welcher der Abstand ermittelt wird wie z.B. in DE 101 38 531 A1 und DE 197 57 595 A1 sowie EP 309 927 B1 und DE 38 40 425 A1. Diese Verfahren können sowohl auf elektromagnetischen, als auch auf Ultraschallwellen beruhen.

Eine zweite Gruppe beruht - ebenfalls bei aktiver Beleuchtung - auf Messungen der Phasenverschiebung zwischen emittierter und reflektierter Strahlung. Eine dritte Gruppe nutzt die Tatsache, dass die Schärfe eines abgebildeten Gegenstandes eine Funktion seiner Entfernung ist. Mit mindestens zwei Bildern unterschiedlicher Fokussierung der Kamera kann (wie z.B. in EP 0 533 590 B1 beschrieben) ein Entfernungsbild erstellt werden. Die vierte Gruppe, zu der auch die Abstandsbild-Videoeinrichtung gehört, beruht auf den bekannten Stereoprinzipien, bei denen aus fokalen Abbildungen unter mehreren Ansichten letztlich durch Triangulation die Abstände der abgebildeten Objektpunkte geschätzt werden.

Die Nachteile der ersten beiden oben genannten Gruppen besteht in der Notwendigkeit einer starken, aktiven Lichtquelle und der Beschränkung auf deren Reichweite bzw. Zulassungsvorschriften. Ferner ist die Auswerteelektronik hochkomplex und aufwändig zu fertigen sowie für keine andere Anwendung brauchbar. Dies führt zu hohen Herstellungskosten bei eingeschränkter Anwendbarkeit. Der Hauptnachteil der dritten Gruppe liegt in der zeitlichen Abfolge der benötigten Aufnahmen, d.h., dass sich Objekte in dieser Zeit nicht bewegen dürfen.

Stereosysteme hingegen sind passive Systeme und verwenden Standard-Videokameras. Herkömmliche Stereosysteme benutzen zwei oder mehr Videokameras, welche starr miteinander verbunden sind und die gleiche Szene beobachten. Nachteilig sind dabei jedoch a) die Notwendigkeit, die Bilder der Kameras gleichzeitig aufzunehmen (Pixel-Synchronisationseinrichtung der Kameras und des Bildeinzuges), b) die hohe Anforderung an die starre mechanische Verbindung (insbesondere der Winkelfreiheitsgrade) sowie c) der Rechenaufwand zur Rektifizierung der Bilder der Einzelkameras bei jeder Aufnahme und der Aufwand für die Kalibrierung der einzelnen Kameras als Voraussetzung für die Rektifizierung und ferner d) der hohe Rechenaufwand für die Bestimmung der Disparität mit den herkömmlichen Blockmatching-Methoden.

In EP 0 650 145 A2 wird eine Interpolation zwischen den Stereobildern als Vorverarbeitung für die Disparitätsbestimmung vorgeschlagen, welche ohne Kalibrierung und Rektifizierung die Epipolargeometrie herstellt und durch Erzeugung von Zwischenbildern die Disparitätsbestimmung optimiert. Jedoch ist auch dieses Verfahren sehr rechnintensiv. Die Nachteile führen zu hohen Herstellungskosten und geringer Frequenz bei der Erzeugung der Abstandsbilder.

Anstelle mehrerer Kameras kann auch nur eine Kamera benutzt werden, auf deren Bildsensor mehrere Ansichten der Szene mittels Spiegeln und/oder Prismen als Teilbilder dargestellt werden, wodurch die Notwendigkeit einer Synchronisierung entfällt. Werden hierfür Spiegeloptiken verwendet, spricht man von katadioptrischen Anordnungen. Diese sind lange bekannt, wurden aber erst in jüngerer Zeit vor allem durch Gluckmann und Nayar (J. Gluckman and S. Nayar. Planar catadioptric stereo: geometry and calibration. In Proceedings of the 1999 Conference on Computer Vision and Pattern Recog- nition, 1999.) systematisch untersucht. Besonders interessant sind die rektifizierenden Spiegelanordnungen, welche bereits rektifizierte Stereo-Halbbilder erzeugen, so dass der Rechenaufwand zur Rektifizierung und der zugehörigen Kalibrierung entfällt. Die einfachste Anordnung besteht aus lediglich einem Spiegel mit einer Videokamera, bei der lediglich der Roll- und Gierwinkel relativ zum Spiegel-Koordinatensystem starr sein müssen. Der Nachteil einer solchen Anordnung liegt darin, dass zur Erzielung kompakter Aufbauten nur eine kleine Stereobasis möglich ist, was zu kleinen Disparitäten bei größeren Objektabständen im Stereo-Bildpaar führt. Die herkömmlichen Blockmatching-Ansätze zur Disparitätsbestimmung liefern dann nur ungenaue Werte. Ein weiterer Nachteil der herkömmlichen Blockmatching-Ansätze ist der hohe Rechenaufwand beim Mustervergleich zwischen einem Block aus dem einen Bild mit vielen (verschobenen) Blöcken aus dem anderen Bild.

Es ist somit Aufgabe der vorliegenden Erfindung, eine Abstandsbild-Videoeinrichtung vorzusehen, welche auf einer einfachen und günstigen Anordnung beruht und lediglich einen reduzierten Rechenaufwand benötigt.

Diese Aufgabe wird durch eine Abstandsbild-Videoeinrichtung gemäß Anspruch 1 sowie durch ein Verfahren zur berührungslosen bildgebenden Abstandsbestimmung gemäß Anspruch 6 gelöst.

Somit wird eine Abstandsbild-Videoeinrichtung vorgesehen mit einer Videoeinheit zum Aufzeichnen von Videobildern, einer rektifizierenden katadioptrischen Stereo-Spiegelanordnung und einer Recheneinheit zum Auswerten der von der Videoeinheit aufgezeichneten Videobilder und zum Erzeugen eines zusätzlichen Bildes für jedes aufgezeichnete Videobild, wobei das zusätzliche Bild den jeweiligen Abstand der zu den Videobildpunkten gehörenden Objektpunkte von der Videoeinheit wiedergibt.

Durch Kombination einer rektifizierenden katadioptrischen Stereo-Anordnung mit einem lokalen Approximationsverfahren für die Disparitätsberechnung kompensieren sich die Nachteile der beiden Komponenten, d. h. kleine erzielbare bzw. behandelbare Disparitäten, und die Vorteile, d. h. Verzichtbarkeit der numerischen Bildrektifizierung bzw. geringe numerische Komplexität, kommen zum Tragen. Somit kann die benötigte Zeit zur Erstellung eines Abstandbildes um mehr als eine Größenordnung gesenkt werden.

Die Abstandsbild-Videoeinrichtung stellt eine einfache und produktionstechnisch günstige Anordnung dar mit hoher Geschwindigkeit bei der Berechnung der Abstandsbilder und besonderer Eignung für große Objektabstände im Verhältnis zur Stereo-Basis. Diese Eigenschaften resultieren aus der Kombination von a) einer monokularen, rektifizierenden katadioptrischen Stereoanordnung (bestehend aus einer Standard-Videokamera und einem Spiegel) mit b) einem speziell entwickelten subpixel-genauen und besonders schnellen lokalen Approximationsverfahren erster Ordnung für das Block-Matching) zur Disparitätsberechnung.

Die Vorteile gegenüber den üblichen Mehrkamera-Stereo-Konfigurationen liegen zunächst in der Einfachheit des Aufbaus (eine Kamera und ein Spiegel genügen). Dadurch werden nicht nur günstige Produktionskosten, sondern auch ein gegen mechanische Einflüsse robuster Aufbau ermöglicht. Da nur eine Kamera benutzt wird, entfallen Vorrichtungen für die Synchronisation und den radiometrischen Abgleich mehrerer Kameras. Der für den Rechenaufwand wesentliche Vorteil liegt jedoch darin, dass bei entsprechender Spiegel-Kamera-Anordnung Epipolargeometrie zwischen den Bildern des Stereobildpaares vorliegt. Dadurch entfällt die Berechnung zur Rektifizierung der Bilder für jedes Videobild und der zur Ermittlung der Rektifizierungsparameter notwendige hohe Kalibrieraufwand.

Der Nachteil der katadioptrischen Einspiegel-Stereoanordnung stellt die Abhängigkeit der Basislänge versus Stereo-Bildwinkel dar. Bei der einfachsten Konfiguration mit nur einem Spiegel ergibt sich aus der Endlichkeit der Spiegelgröße eine Asymmetrie zwischen dem abgebildeten Bereich des linken und des rechten Stereobildes. Der Blickwinkel, der über den Spiegel gesehen wird, ergibt sich aus der Formel

$$\varphi = \arctan\left(\frac{2L}{b}\right) - \frac{\pi}{2} + \frac{\theta}{2},$$

wobei L die Länge des Spiegels, b die Basislänge und $\Theta$ der Öffnungswinkel der verwendeten Videokamera ist. Daraus ist ersichtlich, dass bei endlicher, gleicher Spiegelgröße ein größerer Stereo-Bildwinkel nur durch eine kleinere Basis realisiert werden kann. Kleine Basislängen verringern jedoch die Disparitäten bei gleicher Tiefe.

Wird daher eine kompakte Bauweise angestrebt, ist eine kleine Basis nötig und damit ein Auswerteverfahren, welches auch im Bereich kleiner Verschiebungen noch zuverlässige Disparitätswerte liefert.

Zur Kompensation des oben genannten Nachteils der katadioptrischen Einspiegel-Anordnung einer geringen Stereo-Basislänge wird ein schnelles, lineares Verfahren als Approximation der bisher üblichen Block-Matching-Verfahren zur Disparitätsbestimmung vorgesehen, das insbesondere nur kleine Disparitäten im Bild sehr genau errechnen kann, um auch die durch die katadioptrische Einspiegel-Anordnung resultierenden großen Objektabstände im Verhältnis zur Stereo-Basis korrekt zu behandeln. Das entwickelte lokale Approximationsverfahren benötigt ferner wesentlich weniger Rechenoperationen, da es den aufwändigen Mustervergleich zwischen einem Block aus dem einen Bild mit vielen (verschobenen) Blöcken aus dem anderen Bild ersetzt durch die einmalige Berechnung der rein lokalen Größen "Differenz zwischen den Pixeln der beiden Halbbilder" und "Gradient des einen Halbbildes".

Nachfolgend werden die Ausführungsbeispiele anhand der Figuren näher erläutert.

Figur 1 zeigt ein Funktionsschemata einer AbstandsbildVideoeinrichtung gemäß der Erfindung,

Figur 2 zeigt eine Schnittzeichnung von oben betrachtet einer schematischen Darstellung einer katadioptrischen EinspiegelAnordnung,

Figur 3 zeigt eine Schnittansicht einer Seitenansicht einer schematischen Darstellung einer katadioptrischen EinspiegelAnordnung,

Figur 4 zeigt eine schematische Darstellung eines Kameraträgers gemäß einem Ausführungsbeispiel der Erfindung,

Figur 5    zeigt eine Bewegungstransformation für eine katadioptrischen Einspiegel-Anordnung, und

Figur 6    zeigt eine Stereo-Bildwinkelbegrenzung bei einer katadioptrischen Einspiegel-Anordnung gemäß Figur 5.

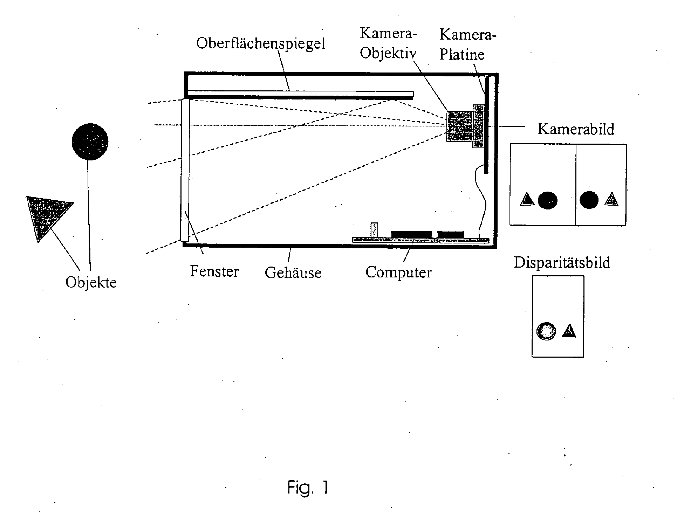

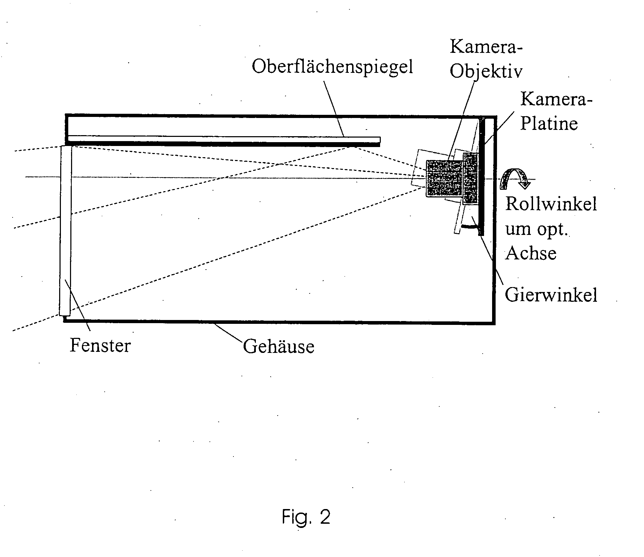

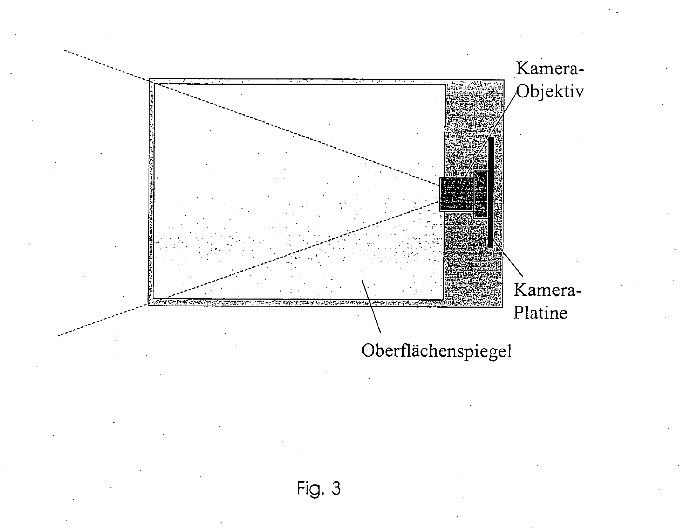

Figur 1 zeigt ein Funktionsschemata einer Abstandsbild-Videoeinrichtung, Figur 2 zeigt eine Schnittzeichnung von oben betrachtet einer katadioptrischen Einspiegel-Anordnung, und Figur 3 zeigt eine Schnittansicht einer Seitenansicht einer katadioptrischen Einspiegel-Anordnung.

Die gesamte Abstandsbild-Videoeinrichtung ist in einem quaderförmigen Gehäuse untergebracht. An der einen Seite des Gehäuses ist ein Fenster vorgesehen und im Wesentlichen rechtwinklig dazu ein Oberflächenspiegel. An der gegenüberliegenden Seite des Gehäuses ist ein Kameraobjektiv mit einer Kameraplatine angeordnet. Eine Recheneinheit ist mit der Kameraplatine verbunden, um die aufgenommenen Videobilder auszuwerten und ein Disparitätsbild zu erzeugen. Alternativ dazu kann sich die Recheneinheit auch extern zum Gehäuse befinden.

In Figur 2 ist die Freiheitsgrade der Kamera-Spiegelanordnung gezeigt. Hierbei kann der Rollwinkel und der Gierwinkel des Kameraobjektivs eingestellt werden.

Idealerweise ist die Spiegel-Normale senkrecht zur optische Achse der Kamera und parallel zu den Zeilen des Kamera-Sensors. Ein Abweichen von der Parallelität zwischen Spiegel-Normale und Zeilen (Rollwinkel der Kamera) ist absolut kritisch und muss klein gegen den durch die Berandung einer Zeile des Bildsensors definierten Winkel sein. Kann -wie bei Standard-Videokameraausführungen üblich- der Rollwinkel nicht genau genug eingehalten werden, wird eine Justiereinrichtung des Rollwinkels benutzt, die mit entsprechender Auswertesoftware eine sehr genaue Rollwinkeleinstellung ermöglicht. Der azimuthale Winkel der optischen Kamera-Achse gegen die Spiegel-Normale sollte im Bereich von 5° justierbar sein, da hiermit der Arbeitsabstand der Kamera (Abstand der Objektebene mit Disparität Null) festgelegt wird. Der Elevationswinkel ist unkritisch und sollte im Rahmen vernünftiger Fertigungstoleranzen klein sein. Die Lage des optischen Zentrums über der Spiegel-Ebene ist unkritisch, bestimmt aber den Stereo-Bildöffnungswinkel sowie die Stereo-Basislänge. Für die gewählten Eigenschaften des Ausführungsbeispiels sollte es sich am hinteren Rand des Spiegels in der Mitte und ca. 20 mm über dem Spiegel befinden.

Für die Anordnung des Ausführungsbeispiels ist ein Bildwinkel von ca. 60° vorgesehen. Für den gewünschten Stereo-Bildwinkel von 22° ergibt sich bei einer Stereobasis b von 40 mm eine Spiegellänge L von 150 mm. Die Spiegelhöhe ist dann mit ebenfalls 150 mm ausreichend. Alternative Parameter für die Stereobasis, die Spiegellänge, den Stereo-Bildwinkel sind ebenfalls möglich.

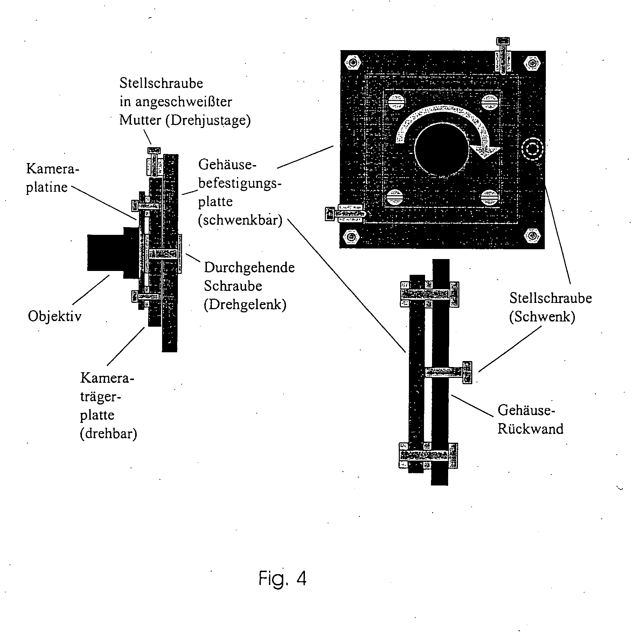

Für die Platinen-Kamera ist eine Aufnahme erforderlich, die eine Rollwinkeljustierung (s.o.) und eine Gierwinkel- (Schwenk-) Justierung erlaubt (siehe Figur 4). Die Aufnahme für die Kamera bzw. das Kameraobjektiv weist eine Kameraträgerplatte auf, welche drehbar ausgestaltet ist. Anhand der Stellschrauben kann die Trägerplatte justiert werden, um den Rollwinkel um die optische Achse einzustellen.

Das Prinzip des katadioptrischen Stereo ist bereits seit Ende des 19. Jahrhunderts bekannt und wurde in den vergangenen Jahren für die Gewinnung von Tiefenbildern von H. Mitsumoto, S. Tamura, K. Okazaki, N. Kajimi, and Y. Fukui. 3d reconstruction using mirror images based on a plane symmetry recovery method. IEEE Transactionson Pattern Analysis and Machine Intelligence, 14(9): 941-945, 1992., M. Inaba, T. Hara, and H. Inoue. A stereo viewer based on a single camera with view-control mechanism. In Proceedings of the International Conference on Robots and Systems, July 1993., A. Goshtasby and W. Gruver. Design of a single- lens stereo camera system. Pattern Recognition, 26(6): 923-937, 1993., H. Mathieu and F. Devernay. Systemedemiroirs pour la stereoscopie. Technical Report 0172, INRIA Sophia-Antipolis, 1995, Z. Zhang and H. Tsui. 3-d reconstruction from a single view of an object and its image in a plane mirror. In International Conference on Pattern Recognition, 1998 sowie J. Gluckman and S. Nayar. Planar catadioptric stereo: geometry and calibration. In Proceedings of the 1999 Conference on Computer Vision and Pattern Recog- nition, 1999. J. Gluckman and S. Nayar. Rectified Catadioptric Stereo Sensors. Proc. of IEEE Conference on Computer Vision and Pattern Recognition, June 2000 (CVPR '00), wieder entdeckt und vor allem von Gluckman und Nayar systematisch aufgearbeitet. Es beruht darauf, dass eine Kamera Weltpunkte über Spiegel aus verschiedenen Positionen sieht.

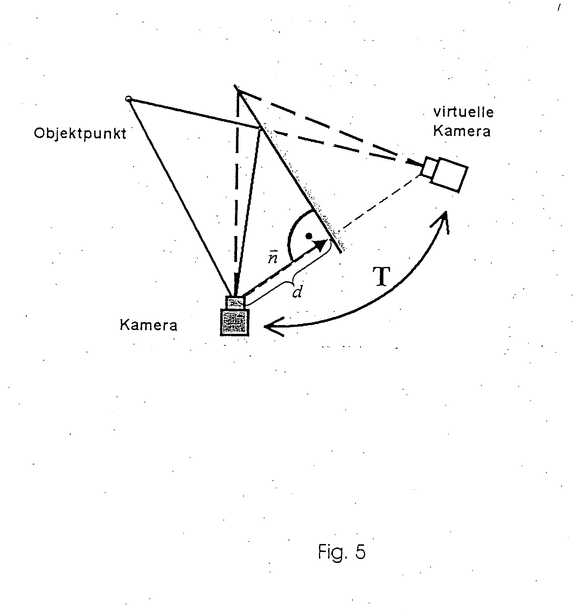

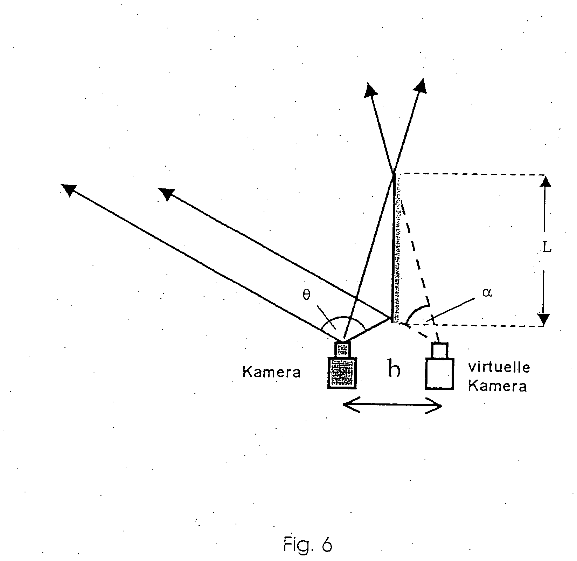

Gemäß Figur 5 ist die Bewegung zwischen realer und virtueller Kamera durch die Bewegung T mit zwei Winkeln und einem Abstand d gegeben. Dabei wird Epipolargeometrie erzielt. Die Rektifizierung (keine Rotation zwischen den Stereo-Kameras, Verschiebung entlang der Bildzeilen und gleiche innere Parameter) wird hierbei durch die spezielle katadioptrische Anordnung in Figur 6 (mit einer Länge L des Spiegels, einer Basislänge b und einem Öffnungswinkel θ der Kamera) erreicht alleine mittels Winkeljustierung und Verwendung einer Optik ohne nicht-radiale Fehler. Dabei ist die rektifizierte Lage unabhängig von einer Translations- oder Nickwinkelbewegung der Kamera, hingegen empfindlich gegenüber Gierwinkelbewegungen und Nicht-Parallelität der horizontalen Bildsensor-Achse mit der Spiegelnormalen. Letztere müssen daher durch konstruktive Maßnahmen unterbunden werden.

Nachfolgend wird ein lokales SQD-Approximationsverfahren zur schnellen und genauen Bestimmung kleiner Disparitäten beschrieben.

Zur Bestimmung der Entfernung eines abgebildeten Objektpunktes wird in der Stereo-Bildauswertung die Disparität als Grundlage verwendet. Die Disparität stellt dabei die Verschiebungslänge der Bildpunktposition des Objektpunktes im einen Bild (z. B. dem rechten Bild) des Stereobildpaares gegenüber der Position des korrespondierenden - zum selben Objektpunkt gehörenden - Bildpunktes im anderen Bild (z. B. dem linken Bild) des Stereobildpaares dar. Unter der Annahme des Lochkamera-Modells ergibt sich der Abstand des Objekts von der Kamera aus dem Verhältnis von Stereobasis mal Brennweite zur Disparität, wenn eine rektifizierte Stereo-Anordnung vorliegt. Eine kleine Stereobasis (wie bei Einspiegelanordnungen) führt daher bei gleichem Objektabstand zu geringen Disparitäten.

Zur Kompensation des oben genannten Nachteils der katadioptrischen Einspiegel-Anordnung einer geringen Stereo-Basislänge wird ein schnelles, lineares Verfahren vorgeschlagen, das auch kleine Disparitäten im Bild genau errechnen kann, um auch große Objektabstände im Verhältnis zur Stereo-Basis zu behandeln.

Bei den bisherigen Block-Matching Ansätzen wird die Ähnlichkeit einer kleinen Umgebung (Block) $U_x$ in Zeilenrichtung um die betrachtete Pixelposition x im linken Bild mit einer um $\Delta x$ verschobenen Umgebung gleicher Größe im rechten Bild in der gleichen Zeile bestimmt. Die üblicherweise verwendeten Ähnlichkeitsmaße sind die Kreuzkorrelation KK, die Summe der absoluten Differenzen (SAD) und die Summe der quadratischen Differenzen (SQD) der Umgebungen im linken und im rechten Bild. Als Disparität ergibt sich diejenige Verschiebung, für welche ein Maximum der KK bzw. ein Minimum der SAD oder der SQD vorliegt. Die Minimum-Bedingung z.B. für die SQD lautet:

$g_r$: *Grauwertverlauf rechtes Bild*, $g_l$: *Grauwertverlauf linkes Bild, lokale Verschiebung* $\Delta x$

$$\frac{\partial}{\partial \Delta x} \sum_{U_x} [g_r(x + \Delta x) - g_l(x)]^2 \overset{!}{=} 0 \quad (1) \quad \Rightarrow \quad 2\sum_{U_x} [g_r(x + \Delta x) - g_l(x)] \cdot \frac{\partial}{\partial \Delta x} g_r(x + \Delta x) \overset{!}{=} 0 \quad (2)$$

Mit anderen Worten, für jeden Bildpunkt des einen Bildes (rechtes Bild) wird untersucht, wie weit der korrespondierende (zum gleichen Objektpunkt gehörige) Bildpunkt des anderen Bildes (linkes Bild) bezüglich seiner Position im Bild verschoben ist. Dazu wird das Grauwertmuster einer Umgebung des Bildpunktes (d. h. eines Blockes, z.B. drei Bildpunkte Höhe und sieben Bildpunkte Breite)) betrachtet und die Position im anderen Bild des Stereo-Bildpaares gesucht, an welcher das Grauwertmuster des entsprechenden Blocks diesem Muster am ähnlichsten ist. Die Differenz zwischen den Positionen des Ursprungsblocks und des gefundenen ähnlichsten Blocks ist dann die gesuchte Disparität. Die üblicherweise verwendeten Ähnlichkeitsmaße sind die Kreuzkorrelation KK, die

Summe der absoluten Differenzen (SAD) und die Summe der quadratischen Differenzen (SQD) der Grauwerte der Umgebungen im linken und im rechten Bild. Der ähnlichste Block weist ein Minimum von SAD bzw. SQD oder ein Maximum der KK auf.

Dabei muss gewährleistet sein, dass die Disparität für den betrachteten Block gleich ist. Um auch sub-pixel genau Disparitäten bestimmen zu können, wird der Grauwertverlauf interpoliert und das Extremum des Ähnlichkeitsmaßes damit bestimmt. Wegen der Nicht-Lokalität des Block-Matching-Ansatzes sind derartige Verfahren darauf angewiesen, dass Objektoberflächen-Elemente gleichen Abstands im Bild Flächen einnehmen die deutlich größer als der benutzte Block sind. Da die Blöcke zur Ausprägung eines deutlichen Ähnlichkeitsmaß-Extremums nicht zu klein sein dürfen (typisch 15x3 Pixel), ist der behandelbare Tiefenbereich beschränkt.

Nachfolgend wird ein lokales Approximationsverfahren für SQD mit Auflösungspyramide gemäß einem bevorzugten Ausführungsbeispiel beschrieben.

Ein lokales Verfahren in Zusammenarbeit mit einer - wie oben beschriebenen - Kamera, deren Lage des Arbeitsbereiches (Entfernung, bei der sich die Disparität Null ergibt) einstellbar ist, kombiniert mit einer Auflösungspyramide, kann dies beheben.

Dazu wird die SQD als Funktion der Verschiebung der Blöcke ausgedrückt. Die Disparität ist dann die Verschiebung, bei welcher die SQD-Funktion minimal wird. Dies kann dadurch ausgedrückt werden, dass die Ableitung (Änderung) der SQD-Funktion an der Stelle des Minimums Null wird. Man erhält somit eine Gleichung für die Disparität, welche sich als Nullstelle ergibt. Diese ist jedoch nicht geschlossen lösbar. Eine lösbare Näherung dieser Gleichung (SQD-Minimum-Bedingung) für kleine Disparitäten wird durch Entwicklung in eine Taylor-Reihe und Abbruch nach einer endlichen Anzahl Glieder (z.B. dem linearen Glied) erreicht, wodurch eine lineare (Abbruch nach dem linearen Glied) oder eine quadratische (Abbruch nach dem quadratischen Glied) oder eine polynomiale Gleichung höherer Ordnung (Abbruch nach einem höheren Glied) entsteht.

Die Näherung der obigen SQD-Minimum-Bedingung für kleine Disparitäten wird durch Entwicklung in eine Taylor-Reihe und Abbruch nach dem linearen Glied erreicht:

*Lineare Näherung für kleine Verschiebungen:*

$$g_r(x + \Delta x) \approx g_r(x) + \Delta x \, \frac{\partial}{\partial x} g_r(x) \qquad\qquad (3)$$

$$\left[g_r(x) - g_l(x) + \Delta x \frac{\partial}{\partial x} g_r(x)\right] \frac{\partial}{\partial x} g_r(x) \overset{!}{=} 0 \quad (4) \quad \Rightarrow \Delta x = \frac{g_l(x) - g_r(x)}{\frac{\partial}{\partial x} g_r(x)} \quad (5)$$

Obige Gleichung bestimmt die Disparität $\Delta x$ eindeutig aus der lokalen Differenz und Ableitung. Da jedoch beide Größen mit Rauschen behaftet sind (wobei insbesondere die Ableitung im Nenner bei kleinen Werten kritisch ist), wird eine Mittelungsprozedur verwendet, um die Ergebnisse zu stabilisieren. Dabei wird die SQD-Minimumbedingung (1) unter Näherung (3) dahingehend relaxiert, dass der Ausdruck in (1) in einer kleinen Umgebung um das betrachtete Pixel nicht wie in (1) Null, sondern minimal sein soll. Dies impliziert die Annahme, dass die Disparität in dieser kleinen Umgebung gleich ist. Somit ergibt sich

$$g_l(x) = g_r(x + \Delta x)$$

*Lineare Näherung für kleine Verschiebungen:*

$$g_r(x + \Delta x) \approx g_r(x) + \Delta x \cdot \frac{\partial}{\partial x} g_r(x)$$

$$\Rightarrow g_l(x) \approx g_r(x) + \Delta x \cdot \frac{\partial}{\partial x} g_r(x) \Rightarrow g_l(x) - g_r(x) = \Delta x \cdot \frac{\partial}{\partial x} g_r(x) \quad (6)$$

*Minimierung der Abweichung E von obiger Formel in einer kleinen zweidimensionalen Umgebung $U_{x,y}$ (lokale Glattheit der Disparität):*

$$E = \sum_{U_{x,y}} \left( (g_l(x) - g_r(x)) - \Delta x \cdot \frac{\partial}{\partial x} g_r(x) \right)^2 \quad (7).$$

$$\frac{\partial E}{\partial \Delta x} \overset{!}{=} 0 \quad (8) \quad \Rightarrow \sum_{U_{x,y}} \left( -2 \frac{\partial}{\partial x} g_r(x) \cdot (g_l(x) - g_r(x)) + 2\Delta x \cdot \left( \frac{\partial}{\partial x} g_r(x) \right)^2 \right) \overset{!}{=} 0 \quad (9) \quad \Rightarrow$$

$$\Delta x = \frac{\displaystyle\sum_{U_{x,y}} \frac{\partial}{\partial x} g_r(x) \cdot (g_l(x) - g_r(x))}{\displaystyle\sum_{U_{x,y}} \left( \frac{\partial}{\partial x} g_r(x) \right)^2} \quad (10).$$

Beschränkt man sich somit auf den linearen Fall, bestimmt die resultierende Gleichung die Disparität eindeutig aus der Differenz der Grauwerte der beiden Bilder an der gleichen Bildposition und dem Mittelwert der Ableitungen des Grauwertes nach der Zeilenkoordinate an derselben Bildposition für beide Bilder. Da jedoch beide Größen (Differenz und Ableitung) mit Rauschen behaftet sind (wobei insbesondere die Ableitung im Nenner bei kleinen Werten kritisch ist), wird eine Mittelungsprozedur verwendet, um die Ergebnisse zu stabilisieren. Dabei wird die SQD-Minimumbedingung unter linearer Näherung dahingehend relaxiert, dass der Ausdruck in der Gleichung, aufsummiert in einer kleinen Umgebung um den betrachteten Bildpunkt nicht identisch Null, sondern minimal sein soll. Dies impliziert die Annahme, dass die Disparität in dieser kleinen Umgebung gleich ist.

Gleichung (10) stellt somit die gesuchte lokale Approximation dar, wobei eine typische Umgebung +/- 7 Pixel links und rechts des betrachteten Pixels sowie dieses Pixel selbst umfasst. Als Ableitungsoperator ist ein Canny- oder NAG-Filter empfehlenswert. Wenn der Dynamikbereich der betrachteten Disparitäten die Approximationsvoraussetzung erfüllt, sind die Lösungen von (10) bereits das Endergebnis und formen das gesuchte Abstandsbild.

Die lokale Approximation (10) ist jedoch für große Disparitäten nicht geeignet. Aus diesem Grund wird (10) hierarchisch eine (z.B. Gauss'sche) Auflösungspyramide des Ursprungsbildes -ausgehend von der niedrigsten Auflösung- auf folgende Art und Weise angewendet. Die niedrigste Auflösung wird dabei so gewählt, dass die maximal zu erwartenden Verschiebungen die Kleinheit für die lineare Approximation erfüllen. Hierfür wird zunächst mittels (10), d. h. des lokalen Approximationsverfahrens, die Disparität berechnet. Die errechneten Disparitäten werden gespeichert und mit diesen wird das rechte Bild in der nächsten Auflösungsstufe gewarpt. Aus dem gewarpten rechten Bild und dem linken Bild der gleichen Auflösungsstufe wird mittels (10) wiederum die noch verbleibende Disparität berechnet. Dieser Vorgang wird wiederholt, bis die höchste Auflösungsstufe erreicht ist. Am Ende werden die mit den Auflösungsfaktoren multiplizierten Disparitätswerte aller Auflösungsstufen aufaddiert, um die schlussendliche Gesamt-Disparität zu gewinnen. Auf diese Weise ist die Behandlung eines großen dynamischen Bereiches der Disparität mit einem lokalen Approximationsverfahren möglich.

Voraussetzung für die Durchführung des oben beschriebenen lokalen Approximationsverfahrens ist, dass die Bilddaten bereits einer Rektifizierung unterzogen worden sind. Dies wird durch die gemäß den Figuren 1 bis 6 beschriebene Spiegelanordnung erreicht. Aus einem Halbbild wie beispielsweise dem rechten Bild wird ein Abschnitt entnommen, der an die gleiche Position, d. h. seine ursprüngliche Position in dem rechten Bild, in das andere Halbbild, d. h. das linke Bild, gelegt wird. Die beiden Ausschnitte liegen somit übereinander, und die Differenzen der verschiedenen Grauwerte der übereinanderliegenden Pixel der Ausschnitte des linken und rechten Bildes können somit gebildet werden. Dies kann dann entweder durch die Summe der quadratischen Differenzen SQD oder durch die Summe der absoluten Differenzen SAD über alle Punkte des Ausschnittes erfolgen.

Anschließend wird dieser Ausschnitt aus dem rechten Bild nach rechts oder links verschoben. Nun wird für jede Verschiebung die Summe der Absolutdifferenzen bzw. die Summe der Quadratdifferenzen gebildet. Diese Summen stellen dann ein Maß für die Unähnlichkeit des Bildausschnittes des rechten Bildes bezogen auf die entsprechenden Bildausschnitte des linken Bildes dar. Für jede Verschiebung des Ausschnittes des rechten Bildes wird ein Unähnlichkeitswert bestimmt. Anschließend wird diejenige Verschiebung bestimmt, bei der der Unähnlichkeitswert minimal ist, d. h. es wird diejenige Verschiebung bestimmt, bei der sich die Ausschnitte aus dem linken und rechten Bild am ähnlichsten sind. Diese Verschiebung von der Ursprungsposition wird als Disparität bezeichnet. Aus dem rechten Bild wird nun um jeden Bildpunkt herum ein solcher Abschnitt bestimmt, und das Verfahren wird entsprechend angewendet. Somit wird für jeden Bildpunkt des rechten Bildes ein Disparitätswert erhalten, und ein Disparitätsbild wird bestimmt.

Gemäß einem weiteren Ausführungsbeispiel der Erfindung kann der Arbeitsbereich der oben beschriebenen Abstandsbild-Videoeinrichtung verstellt bzw. eingestellt werden. In Figur 2 und Figur 4 sind die Feinjustierungsmöglichkeiten der Kamera genauer gezeigt. Hierbei kann der Gierwinkel, d.h. der Winkel, welchen die optische Achse der Kamera mit der Spiegelnormalen einschließt, eingestellt werden. Mittels Einstellung des Rollwinkels (Drehung der Kamera um ihre optische Achse) können die Zeilen des linken und des rechten Halbbildes parallel mit den Zeilen des Bildsensors ausgerichtet werden.

Gemäß Figur 4 kann der Rollwinkel durch die beiden gezeigten Stellschrauben entsprechend feinjustiert werden. Zum Einstellen des in Figur 2 gezeigten Gierwinkels wird die durchgehende Schraube (Drehgelenk) verwendet. Um überhaupt einen Gierwinkel verstellen zu können, muss die Gehäusebefestigungsplatte schwenkbar ausgestaltet sein. Mit anderen Worten, der Rollwinkel kann durch die beiden im oberen rechten Bild von Figur 4 gezeigten beiden Stellschrauben erfolgen. Die Verstellung des Gierwinkels erfolgt durch die in dem unteren rechten Bild in der Mitte gezeigte Stellschraube.

Durch Einstellung des Gierwinkels kann erreicht werden, dass das Kameraobjektiv derart eingestellt wird, dass es nicht mehr parallel zum Spiegel angeordnet ist, sondern zum Spiegel hingeschwenkt wird. Wenn das Kameraobjektiv parallel zum Spiegel angeordnet ist, wird eine Disparität von Null für Objekte erreicht, welche unendlich weit von der Kamera entfernt sind. Je näher die Objekte sich der Kamera nähern, desto mehr verschiebt sich das linke und rechte Halbbild. Durch Einstellen des Gierwinkels bezüglich des Spiegels kann der Punkt eingestellt werden, an dem die Disparität Null ist. Beispielsweise kann der Punkt derart eingestellt werden, dass Objekte, welche sich 20 Meter von der Anordnung entfernt aufhalten, keine Verschiebung zwischen dem linken und rechten Bild aufweisen. Gegenstände, die sich jedoch näher an der Spiegelanordnung befinden, weisen dann eine Verschiebung in positiver Richtung auf, und Gegenstände, die sich weiter als 20 Meter entfernt befinden, weisen eine Verschiebung in negativer Richtung auf. Somit kann durch Einstellen des Gierwinkels der Arbeitsbereich der Einrichtung entsprechend festgelegt werden.

Ein Beispiel für eine Verwendung eines derart eingestellten Arbeitsbereiches stellt ein Zählen von Durchtritten von Objekten dar. Mit anderen Worten, es kann genau erfasst werden, wann ein Objekt sich der Anordnung nähert oder entfernt. Ferner kann gezählt werden, wenn Objekte die oben beschriebene Grenze von 20 Metern, d. h. die Disparität von Null, überschreiten.

**Patentansprüche**

1. Abstandsbild-Videoeinrichtung, mit

   einer Videoeinheit zum Aufzeichnen von Videobildern,
   einer rektifizierenden katadioptrischen Stereo-Spiegelanordnung, und
   einer Recheneinheit zum Auswerten der von der Videoeinheit aufgezeichneten Videobilder und zum Erzeugen eines zusätzlichen Bildes für jedes aufgezeichnete Videobild, wobei das zusätzliche Bild den jeweiligen Abstand der zu den Videobildpunkten gehörenden Objektpunkte von der Videoeinheit wiedergibt.

2. Abstandsbild-Videoeinrichtung nach Anspruch 1, wobei die Recheneinheit dazu ausgestaltet ist, eine Disparität der Stereo-Halbbilder durch lokale Approximation eines Block-Matchingverfahren zu berechnen.

3. Abstandsbild-Videoeinrichtung nach Anspruch 1 oder 2, wobei die Stereo-Spiegelanordnung lediglich einen Spiegel aufweist.

4. Abstandsbild-Videoeinrichtung nach einem der vorherigen Ansprüche, ferner mit einer Trägerplatte zur Aufnahme der Videoeinheit,
   wobei die Trägerplatte um die optische Achse der Videoeinrichtung drehbar ausgestaltet ist,
   wobei die Trägerplatte zur Verstellung des Gierwinkels schwenkbar ausgestaltet ist.

5. Abstandsbild-Videoeinrichtung nach Anspruch 4, wobei der Arbeitsbereich der Abstandsbild-Videoeinrichtung durch Verstellen des Gierwinkels einstellbar ist.

6. Verfahren zur berührungslosen bildgebenden Abstandsbestimmung in einer rektifizierenden katadioptrischen Stereo-Spiegelanordnung, mit den Schritten:

   - Aufzeichnen von Videobildern,
   - Auswerten der aufgezeichneten Videobilder,
   - Erzeugen eines zusätzlichen Bildes für jedes aufgezeichnete Videobild, wobei das zusätzliche Bild den jeweiligen Abstand der zu den Videobildpunkten gehörenden Objektpunkte wiedergibt.

7. Verfahren nach Anspruch 6, wobei eine Disparität der Stereo-Halbbilder durch lokale Approximation eines Block-Matching Verfahrens berechnet wird.

8. Verfahren nach Anspruch 6 oder 7, wobei das Block-Matching durch Bestimmung des Minimums der Summe der quadratischen Differenzen der Umgebung in den beiden Halbbildern erfolgt, wobei die Bedingung für das Minimum der Summe der quadratischen Differenzen durch eine Entwicklung einer Taylor-Reihe mit Abbruch nach dem linearen Glied erfolgt.

Fig. 1

Fig. 2

Kamera-
Objektiv

Kamera-
Platine

Oberflächenspiegel

Fig. 3

Fig. 4

Fig. 5

Fig. 6